# EUROPÄISCHE PATENTSCHRIFT

(11) **EP 3 673 568 B1**
(45) Veröffentlichungstag und Bekanntmachung des Hinweises auf die Patenterteilung: **28.04.2021**
(21) Anmeldenummer: 18742767.9
(22) Anmeldetag: 16.07.2018
(51) Int. Cl.: H02K 7/00, H02K 9/19

(54) **MEHRTEILIGE ROTORWELLE FÜR EINE ELEKTRISCHE MASCHINE**
MULTIPART ROTOR SHAFT FOR AN ELECTRIC MACHINE
ARBRE DE ROTOR EN PLUSIEURS PARTIES POUR UNE MACHINE ÉLECTRIQUE

(30) Priorität: 21.08.2017 DE 102017214507
(43) Veröffentlichungstag der Anmeldung: 01.07.2020
(73) Patentinhaber: Vitesco Technologies GmbH, 30165 Hannover (DE)
(72) Erfinder: FRÖHLICH, Holger, 13127 Berlin (DE)
(86) Internationale Anmeldenummer: PCT/EP2018/069200
(87) Internationale Veröffentlichungsnummer: WO 2019/037949

(56) Entgegenhaltungen:
- WO-A1-2017/050447
- DE-A1-102015 223 631

## Beschreibung

Die Erfindung betrifft eine mehrteilige Rotorwelle für eine elektrische Maschine. Weiterhin betrifft die Erfindung einen Rotor und eine elektrische Maschine.

Es sind mehrteilige Rotorwellen für elektrische Maschinen bekannt. Eine derartige Rotorwelle umfasst typischerweise einen beidseitig von Stirnflanschen abgeschlossenen Zylindermantel, wobei sich an den Stirnflanschen jeweils ein Wellenzapfen befindet. Üblicherweise ist zumindest in einem der Stirnflansche, insbesondere im Wellenzapfen, eine koaxiale Zugangsbohrung vorgesehen, die einen Zugang für ein Medium zu einem von dem Zylindermantel umgebenen Wellenhohlraum bildet. Solch hohle Rotorwellen können insbesondere dort eingesetzt werden, wo es auf eine möglichst leichte Bauweise ankommt.

Insbesondere kann zu Zwecken der Kühlung des Rotors ein Kühlmedium durch die hohlen Rotorwellen geleitet werden. Diesbezüglich sei beispielsweise auf die DE 10 2014 107 845 A1 verwiesen, welche beschreibt, ein Kühlmedium einem Hohlraum über ein Rohr zuzuführen und über einen Auslass wieder abzuleiten. Allerdings kann diese Art der Kühlung unter Umständen unzureichend sein und nicht im Verhältnis zum konstruktiven Aufwand und zu der Verschlechterung der Laufeigenschaften des Motors stehen.

Weiterhin sind elektrische Maschinen bekannt, bei denen ein Medium, z.B. ein Schmiermittel oder Kühlmittel, von einer Stirnseite zur anderen Stirnseite transportiert werden muss. In diesem Fall hat der Rotor eine reine Durchleitungsfunktion, für welche sich bislang bekannte Hohlwellen insofern kaum eignen. Bei solchen Maschinen mit Durchleitungsfunktion kann es aufgrund der erheblichen Aufweitung des Leitungsquerschnitts zu Laufunruhen kommen, die durch die Expansion des Mediums in der Hohlwelle und durch die Turbulenzen innerhalb der Hohlwelle verursacht werden. Zudem kann eine vollständig mit flüssigem Medium gefüllte Hohlwelle den Vorteil der Gewichtsersparnis wieder kompensieren. Insbesondere kann sich das Befüllen eines Hohlzylinders mit Flüssigkeit im Hinblick auf den Einsatz in der elektrischen Maschine negativ auf sein rotatorisches Trägheitsmoment auswirken.

Es sind auch verschiedene Lösungen zur Leitung und Verteilung eines Kühlmediums hin zur Wärmeübertragungsfläche bekannt, die meist eine vollständige, über die gesamte axiale und radiale Wegstrecke als Zwangsführung ausgelegte Leitung des Kühlmittels in Kanälen oder Bohrungen aufweisen.

Letztendlich weisen die bekannten Kühleinrichtungen zumindest einen der folgenden Nachteile auf: Auf der einen Seite werden zur Reduzierung des Volumenbedarfs zu geringe Querschnitte der für das Kühlmittel vorgesehenen Leitungen gewählt. Dabei reduziert eine solch kleine Durchgangsbohrung kaum das Gewicht der zu kühlenden Rotorwelle. Zudem kann das Kühlmittel wegen der ohnehin kleinen Flächen nur in geringem Maße an die zu kühlenden Bauteile, insbesondere an das sich in hohem Maße erwärmende Blechpaket, herangeführt werden. Das Kühlmittel benetzt oft nur kleine Flächen an der erwärmten Oberfläche und es kann zu keiner großflächigen Verteilung über den gesamten Umfang kommen.

Auf der anderen Seite können mit großen Leitungsquerschnitten und Hohlräumen in der Rotorwelle zwar nicht nur eine große Oberfläche zur Wärmeübertragung, sondern auch eine besonders leichte Bauweise realisiert werden. Allerdings ist es in diesem Fall nachteilig, dass der Hohlzylinder im Betrieb nahezu vollständig mit Kühlmittel angefüllt werden muss, da sich dadurch der Kühlmittelbedarf erhöht, was wiederum zur Zunahme der bewegten Masse führt, welche durch die Leichtbauweise gerade vermieden werden soll.

Aus der WO 2017/050447 A1 ist bekannt: eine mehrteilige Rotorwelle für eine elektrische Maschine, die mehrteilige Rotorwelle umfassend:
- einen ersten Wellenzapfen mit einem ersten Stirnflansch und mit einer axialen Durchgangsbohrung,
- einen zweiten Wellenzapfen mit einem zweiten Stirnflansch,
- einen hohlen Träger für ein Rotorblechpaket,
- ein Trennelement, wobei
- der Träger für das Rotorblechpaket zwischen dem ersten Wellenzapfen und dem zweiten Wellenzapfen angeordnet ist,
- der Träger, der erste Stirnflansch und der zweite Stirnflansch zwischen sich einen Hohlraum begrenzen, wobei
- das Trennelement den äußeren Teil des Hohlraums in einen ersten Teil-Hohlraum auf der Seite des ersten Wellenzapfens und in einen zweiten Teil-Hohlraum auf der Seite des zweiten Wellenzapfens teilt.

Die Aufgabe der vorliegenden Erfindung kann daher darin bestehen, eine konstruktiv einfach aufgebaute und kostengünstig herstellbare mehrteilige Rotorwelle für eine elektrische Maschine bereitzustellen, wobei die Rotorwelle als Hohlwelle ausgeführt ist und bei geringem Gewicht sowie guten Laufeigenschaften eine effiziente Kühlfunktion und Durchleitungsfunktion erfüllt.

Die Aufgabe wird gelöst durch den Gegenstand des unabhängigen Anspruchs 1. Vorteilhafte Ausführungsformen sind Gegenstand der abhängigen Ansprüche, der folgenden Beschreibung sowie der Figuren.

Gemäß einem ersten Aspekt der Erfindung wird eine mehrteilige Rotorwelle für eine elektrische Maschine bereitgestellt. Die mehrteilige Rotorwelle umfasst einen ersten Wellenzapfen mit einem ersten Stirnflansch und mit einer axialen Durchgangsbohrung, einen zweiten Wellenzapfen mit einem zweiten Stirnflansch, einen hohlen Träger für ein Rotorblechpaket, ein Leitungselement zur Durchleitung eines Kühlmediums und ein Trennelement.

Der Träger für das Rotorblechpaket ist zwischen dem ersten Wellenzapfen und dem zweiten Wellenzapfen angeordnet, wobei der Träger, der erste Stirnflansch und der zweite Stirnflansch zwischen sich einen Hohlraum begrenzen. Die Wellenzapfen können drehfest mit dem Träger verbunden sein, sodass sich bei rotierenden Wellenzapfen der Träger mitdreht. Auf ähnliche Weise kann das Leitungselement drehfest mit dem Träger und/oder mit den Stirnflanschen verbunden sein, sodass sich bei rotierenden Wellenzapfen das Leitungselement mitdreht.

Weiterhin bildet das Leitungselement einen Kühlkanal innerhalb des Hohlraums, wobei der Kühlkanal mit der ersten axialen Durchgangsbohrung verbunden ist, sich zwischen dem ersten Wellenzapfen und dem zweiten Wellenzapfen erstreckt und mit einem äußeren Teil des Hohlraums verbunden ist, welcher zwischen dem Träger und dem Leitungselement gebildet wird.

Außerdem teilt das Trennelement den äußeren Teil des Hohlraums in einen ersten Teil-Hohlraum ("linker Teil-Hohlraum") auf der Seite des ersten Wellenzapfens und in einen zweiten Teil-Hohlraum ("rechter Teil-Hohlraum") auf der Seite des zweiten Wellenzapfens. Dadurch wird eine besonders steife Auslegung erlaubt. Weiterhin wird ein Beitrag zur Abstützung einer Kühlmedium-Zuführung im Inneren des Rotors geleistet. Insbesondere kann das Trennelement - bezogen auf eine Längsrichtung der Rotorwelle bzw. des Leitungselements - mittig angeordnet sein. In dieser Position kann das Trennelement insbesondere symmetrisch angeordnete Teil-Hohlräume gleichen Volumens erzeugen. Die Anordnung in der Mitte ermöglicht weiterhin eine besonders symmetrische Krafteinleitung in das Trennelement.

Die erfindungsgemäße Rotorwelle gewährleistet einen Medientransport, insbesondere einen Transport von Flüssigkeiten, z.B. von Schmiermittel oder Kühlmittel, insbesondere eine isolierende Kühlflüssigkeit wie Öl, aber auch von Ölnebel oder Gasen durch die hohle Rotorwelle.

Dabei kann insbesondere vorgesehen sein, dass keine vollständige Spülung stattfindet, sondern lediglich eine Benetzung der zu kühlenden Oberflächen mit Kühlflüssigkeit. Somit wird mit einer geringen Menge Kühlmittel und entsprechend kleinem Volumenstrom lediglich so viel von dem gesamten Wellenhohlraum durchströmt, dass nur die für den Wärmeaustausch wesentlichen inneren Oberflächen und insbesondere eine innere Mantelfläche des Trägers benetzt wird. Aufgrund der geringen Kühlmittelmenge kommt es entsprechend nur zu einer minimalen Zunahme der bewegten Massen und damit des Trägheitsmoments.

Insbesondere kann Wärme im Bereich des Rotorblechpakets abgeführt werden. Dazu kann vorgesehen sein, das Medium einseitig über die erste axiale Durchgangsbohrung, welche als Medieneinlass dient, in den Kühlkanal des Leitungselements einzuleiten, und von dort aus dem ersten Teil-Hohlraum und dem zweiten Teil-Hohlraum zuzuführen, sodass das Medium die innere Mantelfläche des Trägers zu dessen Kühlung benetzen kann. Auf diese Weise kann eine Kühlung der Rotorwelle von innen heraus ermöglicht werden.

Durch eine entsprechende Verringerung der Temperaturen kann gerade bei einer definierten Bauteil-Grenztemperatur eine höhere Leistung des Rotors erreicht werden, sodass sich ein verbessertes Leistungsgewicht respektive Leistungsvolumen einer elektrischen Maschine ergeben kann. Die Erfindung ermöglicht somit eine leichtbauorientierte Konzeption eines Rotors bei geringem Kühlmitteleinsatz und bei besonders effizienter Kühlung. Dabei ist es besonders vorteilhaft, dass die zu rotierende Masse trotz des Kühlmittelinhaltes gering bleiben kann. Ein geringes Gewicht des Rotors ist von besonderem Wert für die Antriebseffizienz, da es sich um ein rotierendes Bauteil handelt. Dies bietet auch beim Beschleunigungsvorgang Effizienzvorteile. Weiterhin kann durch die effiziente Rotorkühlung eine Temperaturklasse bei der Anwendung von Permanentmagneten gesenkt werden, was ein Einsparpotenzial zur Folge hat.

Ein besonderer Vorteil des Leitungselements ist, dass am gebauten Rotor nur geringfügige bauliche Veränderungen vorgenommen werden müssen, um das Kühlungskonzept und die Durchleitungsfunktion - auch als Baukastenlösung - zu realisieren. Das zusätzliche Leitelement kann über eine einfache Anschlussgeometrie in die Rotorwelle integriert und mit den Zuleitungen verbunden werden, sodass ein einfacher Kühlsystemaufbau bzw. Durchleitungsaufbau mit einer minimalen Anzahl an Zusatzkomponenten gegeben ist.

Ein bekannter Ansatz zur Gewichtsreduzierung des Rotors besteht darin, Teilbereiche inaktiver Blechzonen auszustanzen. Gemäß der vorliegenden Erfindung wird hingegen eine Architektur geschaffen, die sich auf einen aktiv magnetflusslenkenden Blechpaketquerschnitt beschränkt. Hierdurch lässt sich das Gewicht des Rotors und somit dessen Massenträgheitsmoment signifikant senken. Dabei kann ein maximal großer Bohrungsdurchmesser des Blechpakets gewählt werden. Auf inaktives Füllmaterial zwischen Rotorwelle und aktivem Elektroblech Material kann hingegen verzichtet werden. Stattdessen wird in den Träger zur drehfesten Aufnahme des Rotorblechpakets das Leitungselement eingesetzt, welches ein sehr geringes Gewicht mit einer großen Oberfläche vereint und somit ein Leichtbaukonzept mit einer optimalen Rotorkühlung kombiniert.

Erfindungsgemäß ist vorgesehen, dass der erste Teil-Hohlraum über wenigstens eine erste Bohrung des Leitungselements mit dem Kühlkanal verbunden ist, und dass der zweite Teil-Hohlraum über wenigstens eine zweite Bohrung des Leitungselements mit dem Kühlkanal verbunden ist. Insbesondere kann das Leitungselement mehrere erste Bohrungen und mehrere zweite Bohrungen aufweisen, welche jeweils in einer Umfangsrichtung beabstandet zueinander angeordnet sind. Über die Bohrungen kann Kühlmedium aus dem Kühlkanal dem ersten Teil-Hohlraum und dem zweiten Teil-Hohlraum zugeführt werden. Wenn das Leitungselement rotiert, kann durch auftretende Fliehkräfte das Kühlmedium dabei aus den Bohrungen in die Teil-Hohlräume geschleudert werden.

Weiterhin ist erfindungsgemäß vorgesehen, dass der erste Stirnflansch wenigstens eine erste Öffnung zur Abfuhr von Kühlmedium aus dem ersten Teil-Hohlraum aufweist, und wobei der zweite Stirnflansch wenigstens eine zweite Öffnung zur Abfuhr von Kühlmedium aus dem zweiten Teil-Hohlraum aufweist. Die Öffnungen ermöglichen, dass Kühlmedium, welches in die Teil-Hohlräume eingeleitet worden ist, diese wieder verlassen kann. Auf diese Weise kann ein Kühlmedium-Kreislauf auf besonders einfache Art und Weise erzeugt werden.

Ferner kann vorteilhaft vorgesehen sein, dass das Trennelement in radialer Richtung von dem Leitungselement absteht. Dadurch wird eine besonders steife Auslegung erlaubt, die eine hohe Stabilität ermöglicht.

Außerdem kann vorteilhaft vorgesehen sein, dass das Trennelement einteilig mit dem Leitungselement verbunden ist. Dadurch kann insbesondere der Zusammenhalt zwischen dem Leitungselement und dem Trendelement erhöht werden.

In einer Ausführungsform ist weiterhin eine externe Pumpe vorgesehen, welche außerhalb der Rotorwelle angeordnet ist, und welche dazu eingerichtet ist, ein Kühlmedium durch die axiale Durchgangsbohrung, den Kühlkanal, den ersten Teil-Hohlraum sowie durch den zweiten Teil-Hohlraum zu fördern. Diese Ausführungsform leistet einen Beitrag, rotierende Massen besonders gering zu halten, was sich besonders vorteilhaft auf das Massenträgheitsmoment der Rotorwelle auswirkt.

In einer weiteren Ausführungsform ist ferner eine interne Pumpe vorgesehen, welche innerhalb der Rotorwelle angeordnet ist und von der Rotorwelle angetrieben wird, und welche dazu eingerichtet ist, ein Kühlmedium durch die axiale Durchgangsbohrung, den Kühlkanal, den ersten Teil-Hohlraum sowie durch den zweiten Teil-Hohlraum zu fördern. Diese Ausführungsform leistet insbesondere einen Beitrag, die Förderung von Kühlmedium besonders effizient zu gestalten, da die interne Pumpe keine externe Energiequelle benötigt und besonders einfach umgesetzt werden kann.

In diesem Zusammenhang ist insbesondere vorgesehen, dass die interne Pumpe ein mit dem Leitungselement drehfest verbundenes doppelflutiges Pumpenlaufrad umfasst. Das doppelflutige Pumpenlaufrad kann insbesondere als Radiallaufrad realisiert werden. Das doppelflutige Pumpenlaufrad kann sich insbesondere dadurch auszeichnen, dass zwei Laufräder jeweils gespiegelt zueinander angeordnet werden.

So kann insbesondere vorteilhaft vorgesehen sein, dass das doppelflutige Pumpenlaufrad ein erstes Laufrad und ein zweites Laufrad umfasst. Dabei kann das erste Laufrad innerhalb des ersten Teil-Hohlraums angeordnet und dazu eingerichtet sein, in dem Kühlkanal befindliches Kühlmedium über die wenigstens eine erste Bohrung des Leitungselements in den ersten Teilhohlraum zu fördern. Auf ähnliche Weise kann das zweite Laufrad innerhalb des zweiten Teil-Hohlraums angeordnet und dazu eingerichtet sein, in dem Kühlkanal befindliches Kühlmedium über die wenigstens eine zweite Bohrung des Leitungselements in den zweiten Teilhohlraum zu fördern.

Gemäß einem zweiten Aspekt der Erfindung wird ein Rotor für eine elektrische Maschine bereitgestellt. Der Rotor umfasst eine mehrteilige Rotorwelle gemäß dem ersten Aspekt der Erfindung und ein Rotorblechpaket, welches drehfest auf dem Träger der mehrteiligen Rotorwelle gelagert ist.

Gemäß einem dritten Aspekt der Erfindung wird eine elektrische Maschine für ein Fahrzeug bereitgestellt. Die elektrische Maschine umfasst einen Rotor gemäß dem zweiten Aspekt der Erfindung. Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

Die elektrische Maschine, welche bei idealer Wärmeabfuhr ohne wesentlichen Einfluss der Kühlung auf das Beschleunigungsverhalten vergleichsweise klein bauen kann und dennoch eine hohe elektrische Dauerleistung bzw. ein entsprechend hohes Dauerdrehmoment zur Verfügung stellen kann, eignet sich ideal für den Einsatz in Kraftfahrzeugen, insbesondere in elektrischen oder hybridisierten Antriebssträngen von Fahrzeugen, da hier eine hohe Leistungsfähigkeit bei minimalem Bauraum eine der Kernanforderungen ist. Die erfindungsgemäße elektrische Maschine hat ihre bevorzugte Verwendung daher in einem solchen Anwendungsfeld, in dem sie für Kraftfahrzeug-Antriebsstränge, insbesondere als Motor, Generator und/oder Motor-Generator in seriellen oder parallelen hybridisierten Antriebssträngen sowie auch in rein elektrischen Antriebssträngen eingesetzt wird.

Im Folgenden werden Ausführungsbeispiele der Erfindung anhand der teilweise schematischen Zeichnung näher erläutert. Hierbei zeigt
- Fig. 1: eine Längsschnittdarstellung eines Ausführungsbeispiels einer erfindungsgemäßen Rotorwelle mit einem ersten Teil-Hohlraum und mit einem zweiten Teilhohlraum sowie mit einer externen Pumpe, und
- Fig. 2: eine Längsschnittdarstellung eines Ausführungsbeispiels einer erfindungsgemäßen Rotorwelle mit einem ersten Teil-Hohlraum und mit einem zweiten Teilhohlraum sowie mit einer internen Pumpe.

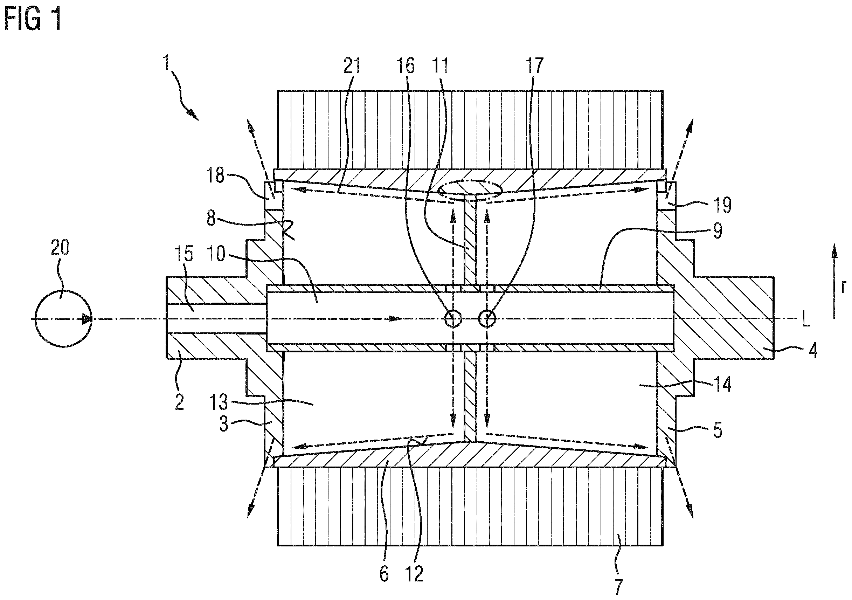

Fig. 1 zeigt eine Rotorwelle 1, die als Hohlwelle ausgeführt ist. Die Rotorwelle 1 umfasst einen ersten Wellenzapfen 2 mit einem ersten Stirnflansch 3 und einen zweiten Wellenzapfen 4 mit einem zweiten Stirnflansch 5. Weiterhin weist die Rotorwelle 1 einen hohlen Träger 6 auf, wobei der Träger 6 drehfest ein Rotorblechpaket 7 aufnimmt, welches den Träger 6 in radialer Richtung r umgibt. Der hohle Träger 6 kann rohrförmig sein, wobei ein Querschnitt des Trägers 6 ausgehend von seinen beiden einander abgewandten Stirnseiten zur Mitte des Trägers 6 hin zunimmt. Auf diese Weise wird die Stabilität des Trägers 6 im Bereich einer Verbindung mit einem Trennelement 11 (siehe weiter unten) erhöht. Gemeinsam bilden die Rotorwelle 1 und das Rotorblechpaket 7 einen Rotor für eine nicht näher dargestellte elektrische Maschine.

Der erste Stirnflansch 3 schließt den rohrförmigen Träger 6 auf einer ersten Stirnseite ab, die in Fig. 1 links dargestellt ist. Der zweite Stirnflansch 5 schließt den rohrförmigen Träger 6 auf einer zweiten Stirnseite ab, die in Fig. 1 rechts dargestellt ist. Insbesondere kann der Träger 6 drehfest mit den Stirnflanschen 3, 5 verbunden sein.

Zwischen dem rohrförmigen Träger 6, dem ersten Stirnflansch 3 und dem zweiten Stirnflansch 5 wird ein Hohlraum 8 begrenzt. Innerhalb des Hohlraums 8 ist ein Leitungselement 9 angeordnet, welches einen Kühlkanal 10 bildet, der in dem durch Fig. 1 gezeigten Ausführungsbeispiel koaxial um eine Längsachse L der Rotorwelle 1 herum verläuft. Das Leitungselement 9 ist in dem gezeigten Ausführungsbeispiel drehfest mit den Stirnflanschen 3, 5 verbunden.

Von dem Leitungselement 9 steht ein Trennelement 11 senkrecht ab. Das Trennelement 11 stützt sich bzw. das Leitungselement 9 an einer inneren Mantelfläche 12 des Trägers 6 ab und kann in diesem Bereich insbesondere kraftschlüssig mit dem Träger 6 verbunden sein. Weiterhin kann das Trennelement 11 einteilig mit dem Leitungselement verbunden sein, wie dies durch Fig. 1 gezeigt ist. Ferner kann das Leitungselement dort, wo es das Trennelement 11 bildet, eine erhöhte Materialstärke aufweisen, um eine besonders steife Auslegung bereitzustellen.

Zwischen dem Leitungselement 9 und der inneren Mantelfläche 12 des Trägers 6 verbleibt ein freier, radial äußerer Teil des Hohlraums 8. Das Trennelement 11 teilt diesen äußeren Teil des Hohlraums 8 in einen ersten Teil-Hohlraum 13 und in einen zweiten Teil-Hohlraum 14 auf. Der erste Teil-Hohlraum 13 ("linker Teil-Hohlraum") befindet sich auf der gemäß Fig. 1 linken Seite, welche dem ersten Wellenzapfen 2 zugewandt ist, wohingegen sich der zweite Teil-Hohlraum 14 ("rechter Teil-Hohlraum") auf der gemäß Fig. 1 rechten Seite befindet, welche dem zweiten Wellenzapfen 4 zugewandt ist.

Der erste Wellenzapfen 2 weist eine axiale Durchgangsbohrung 15 auf, die strömungstechnisch mit dem Kühlkanal 10 verbunden ist. Der Kühlkanal 10 weist in dem gezeigten Ausführungsbeispiel insgesamt vier in Umfangsrichtung um 90° versetzt zueinander angeordnete erste radiale Bohrungen 16 auf, die in der Längsrichtung L gemäß Fig. 1 links neben dem Trennelement 11 angeordnet sind. Analog umfasst der Kühlkanal 10 weiterhin in dem gezeigten Ausführungsbeispiel insgesamt vier in Umfangsrichtung um 90° versetzt zueinander angeordnete zweite radiale Bohrungen 17, die in der Längsrichtung L gemäß Fig. 1 rechts neben dem Trennelement 11 angeordnet sind. Der erste Teil-Hohlraum 13 ist über die ersten Bohrungen 16 mit dem Kühlkanal 10 verbunden, und der zweite Teil-Hohlraum 14 ist über die zweiten Bohrungen 17 mit dem Kühlkanal 10 verbunden.

Der erste Stirnflansch 3 weist mehrere erste Öffnungen 18 auf, welche den ersten Teil-Hohlraum 13 mit einer Umgebung der Rotorwelle 1 verbinden. Insbesondere können die ersten Öffnungen 18 den ersten Teil-Hohlraum 13 mit einem Freiraum innerhalb eines Gehäuses einer elektrischen Maschine verbinden (nicht dargestellt). Die ersten Öffnungen 18 erfüllen insbesondere die Funktion, Kühlmedium aus dem ersten Teil-Hohlraum 13 abzuführen. Analog weist der zweite Stirnflansch 5 mehrere zweite Öffnungen 19 auf, welche den zweiten Teil-Hohlraum 14 mit einer Umgebung der Rotorwelle 1 verbinden.

Die elektrische Maschine kann ferner eine externe Pumpe 20 aufweisen, welche außerhalb der Rotorwelle 1 angeordnet ist. Die externe Pumpe 20 muss nicht von der Rotorwelle 1 angetrieben werden. Mittels der Pumpe 20 kann ein Kühlmedium, z.B. eine Kühlflüssigkeit wie Öl oder aber auch ein Ölnebel, durch die axiale Durchgangsbohrung 15, den Kühlkanal 10, den ersten Teil-Hohlraum 13 sowie durch den zweiten Teil-Hohlraum 14 gefördert werden. Dabei gelangt das Kühlmedium aus dem Kühlkanal 10 über die ersten radialen Bohrungen 16 in den ersten Teil-Hohlraum 13 und über die zweiten radialen Bohrungen 17 in den zweiten Teil-Hohlraum 14.

Aus dem ersten Teil-Hohlraum 13 kann das Kühlmedium über die ersten Öffnungen 18 wieder abgeführt werden, und aus dem zweiten Teil-Hohlraum 14 kann das Kühlmedium über die zweiten Öffnungen 19 wieder abgeführt werden. Danach kann das Kühlmedium wieder durch die Pumpe 20 angesaugt und erneut der axialen Durchgangsbohrung 15 zugeführt werden, um auf diese Weise einen Kreislauf des Kühlmediums zu erzeugen. Mögliche Strömungsverläufe des Kühlmediums sind in Fig. 1 mit Strömungspfeilen 21 verdeutlicht.

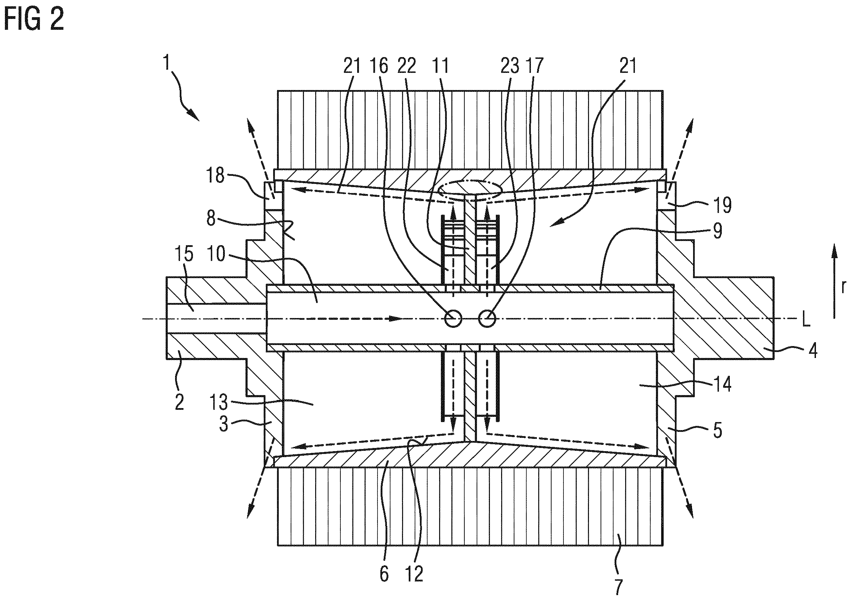

Fig. 2 zeigt einen alternativen Rotor mit einer hohlen Rotorwelle 1, welche prinzipiell ähnlich aufgebaut ist wie die Rotorwelle 1 nach Fig. 1. Die Konfiguration nach Fig. 2 unterscheidet sich jedoch dadurch von derjenigen nach Fig. 1, dass keine externe Pumpe 20 vorgesehen ist. Stattdessen ist eine interne Pumpe 21 vorgesehen, welche innerhalb des Hohlraums 8 angeordnet ist und von dem Leitungselement 9 angetrieben wird.

Die interne Pumpe 21 umfasst ein mit dem Leitungselement 9 drehfest verbundenes doppelflutiges Pumpenlaufrad, in dem gezeigten Ausführungsbeispiel ein Radiallaufrad. Das doppelflutige Pumpenlaufrad umfasst ein erstes Laufrad 22 und ein zweites Laufrad 23, wobei die Laufräder 22, 23 gespiegelt zueinander angeordnet sind. Dabei ist das erste Laufrad 22 innerhalb des ersten Teil-Hohlraums 13 angeordnet, und das zweite Laufrad 23 ist innerhalb des zweiten Teil-Hohlraums 14 angeordnet. Beide Laufräder 22, 23 sind jeweils drehfest mit dem Leitungselement 9 verbunden. Wenn sich die Wellenzapfen 2, 3 drehen, rotieren somit auch das Leitungselement 9 und die Laufräder 22 und 23.

Die rotierenden Laufräder 22 und 23 erzeugen einen Sog, mittels welchem Kühlmittel über die axiale Durchgangsbohrung 15 in den Kühlkanal 10 gefördert werden kann. Kühlmittel, welches sich innerhalb des Kühlkanals 10 befindet, kann durch den Sog weiterhin über die ersten/zweiten Bohrungen 16/17 angesaugt und in den ersten/zweiten Teil-Hohlraum 13/14 gefördert werden. Auf der anderen Seite erzeugen die Laufräder 22 und 23 einen Druck, mittels welchem in die Teil-Hohlräume 13, 14 gefördertes Kühlmedium über die entsprechenden Öffnungen 18/19 aus dem Hohlraum 8 heraus gefördert werden kann.

## Patentansprüche

1. Eine mehrteilige Rotorwelle (1) für eine elektrische Maschine, die mehrteilige Rotorwelle (1) umfassend:
- einen ersten Wellenzapfen (2) mit einem ersten Stirnflansch (3) und mit einer axialen Durchgangsbohrung (15),
- einen zweiten Wellenzapfen (4) mit einem zweiten Stirnflansch (5),
- einen hohlen Träger (6) für ein Rotorblechpaket (7),
- ein Leitungselement (9) zur Durchleitung eines Kühlmediums, und
- ein Trennelement (11),
wobei
- der Träger (6) für das Rotorblechpaket (7) zwischen dem ersten Wellenzapfen (2) und dem zweiten Wellenzapfen (4) angeordnet ist,
- der Träger (6), der erste Stirnflansch (3) und der zweite Stirnflansch (5) zwischen sich einen Hohlraum (8) begrenzen,
- das Leitungselement (9) einen Kühlkanal (10) innerhalb des Hohlraums (8) bildet, wobei der Kühlkanal (10) mit der ersten axialen Durchgangsbohrung (15) verbunden ist, sich zwischen dem ersten Wellenzapfen (2) und dem zweiten Wellenzapfen (4) erstreckt und mit einem äußeren Teil des Hohlraums (8) verbunden ist, welcher zwischen dem Träger (6) und dem Leitungselement (9) gebildet wird,
- das Trennelement (11) den äußeren Teil des Hohlraums (8) in einen ersten Teil-Hohlraum (13) auf der Seite des ersten Wellenzapfens (2) und in einen zweiten Teil-Hohlraum (14) auf der Seite des zweiten Wellenzapfens (4) teilt, wobei der erste Teil-Hohlraum (13) über wenigstens eine erste Bohrung (16) des Leitungselements (9) mit dem Kühlkanal (10) verbunden ist, und der zweite Teil-Hohlraum (14) über wenigstens eine zweite Bohrung (17) des Leitungselements (9) mit dem Kühlkanal (10) verbunden ist, und
- der erste Stirnflansch (3) wenigstens eine erste Öffnung (18) zur Abfuhr von Kühlmedium aus dem ersten Teil-Hohlraum (13) aufweist, und wobei der zweite Stirnflansch (5) wenigstens eine zweite Öffnung (19) zur Abfuhr von Kühlmedium aus dem zweiten Teil-Hohlraum (14) aufweist.

2. Die mehrteilige Rotorwelle (1) nach Anspruch 1, wobei das Trennelement (11) in radialer Richtung (r) von dem Leitungselement (9) absteht.

3. Die mehrteilige Rotorwelle (1) nach einem der vorstehenden Ansprüche, wobei das Trennelement (11) einteilig mit dem Leitungselement (9) verbunden ist.

4. Die mehrteilige Rotorwelle (1) nach einem der vorstehenden Ansprüche, weiterhin umfassend eine externe Pumpe (20), welche außerhalb der Rotorwelle (1) angeordnet ist, und welche dazu eingerichtet ist, ein Kühlmedium durch die axiale Durchgangsbohrung (15), den Kühlkanal (10), den ersten Teil-Hohlraum (13) sowie durch den zweiten Teil-Hohlraum (14) zu fördern.

5. Die mehrteilige Rotorwelle (1) nach einem der vorstehenden Ansprüche, weiterhin umfassend eine interne Pumpe (21), welche innerhalb der Rotorwelle (1) angeordnet ist und von der Rotorwelle (1) angetrieben wird, und welche dazu eingerichtet ist, ein Kühlmedium durch die axiale Durchgangsbohrung (15), den Kühlkanal (10), den ersten Teil-Hohlraum (13) sowie durch den zweiten Teil-Hohlraum (14) zu fördern.

6. Die mehrteilige Rotorwelle (1) nach Anspruch 5, wobei die interne Pumpe (21) ein mit dem Leitungselement (9) drehfest verbundenes doppelflutiges Pumpenlaufrad umfasst.

7. Die mehrteilige Rotorwelle (1) nach Anspruch 6, wobei
- das doppelflutige Pumpenlaufrad ein erstes Laufrad (22) und ein zweites Laufrad (23) umfasst,
- das erste Laufrad (22) innerhalb des ersten Teil-Hohlraums (13) angeordnet und dazu eingerichtet ist, in dem Kühlkanal (10) befindliches Kühlmedium über die wenigstens eine erste Bohrung (16) des Leitungselements (9) in den ersten Teilhohlraum (13) zu fördern, und
- das zweite Laufrad (23) innerhalb des zweiten Teil-Hohlraums (14) angeordnet und dazu eingerichtet ist, in dem Kühlkanal (10) befindliches Kühlmedium über die wenigstens eine zweite Bohrung (17) des Leitungselements (9) in den zweiten Teilhohlraum (14) zu fördern.

8. Ein Rotor für eine elektrische Maschine, der Rotor umfassend eine mehrteilige Rotorwelle (1) nach einem der vorstehenden Ansprüche und ein Rotorblechpaket (7), welches drehfest auf dem Träger (6) der mehrteiligen Rotorwelle (1) gelagert ist.

9. Eine elektrische Maschine für ein Fahrzeug, die elektrische Maschine umfassend einen Rotor nach Anspruch 8.

## Claims

1. Multiple-piece rotor shaft (1) for an electric machine, the multiple-piece rotor shaft (1) comprising:
- a first shaft journal (2) with a first end flange (3) and with an axial through bore (15),
- a second shaft journal (4) with a second end flange (5),
- a hollow carrier (6) for a rotor laminated core (7),
- a line element (9) for conducting a cooling medium, and
- a dividing element (11),
- the carrier (6) for the rotor laminated core (7) being arranged between the first shaft journal (2) and the second shaft journal (4),
- the carrier (6), the first end flange (3) and the second end flange (5) delimiting a cavity (8) between them,
- the line element (9) forming a cooling duct (10) within the cavity (8), the cooling duct (10) being connected to the first axial through bore (15), extending between the first shaft journal (2) and the second shaft journal (4), and being connected to an outer part of the cavity (8) which is formed between the carrier (6) and the line element (9),
- the dividing element (11) dividing the outer part of the cavity (8) into a first part cavity (13) on the side of the first shaft journal (2) and into a second part cavity (14) on the side of the second shaft journal (4), the first part cavity (13) being connected to the cooling duct (10) via at least one first bore (16) of the line element (9), and the second part cavity (14) being connected to the cooling duct (10) via at least one second bore (17) of the line element (9), and
- the first end flange (3) having at least one first opening (18) for the discharge of cooling medium from the first part cavity (13), and the second end flange (5) having at least one second opening (19) for the discharge of cooling medium from the second part cavity (14).

2. Multiple-piece rotor shaft (1) according to Claim 1, the dividing element (11) projecting from the line element (9) in the radial direction (r).

3. Multiple-piece rotor shaft (1) according to either of the preceding claims, the dividing element (11) being connected in one piece to the line element (9).

4. Multiple-piece rotor shaft (1) according to one of the preceding claims, comprising, furthermore, an external pump (20) which is arranged outside the rotor shaft (1) and which is set up to convey a cooling medium through the axial through bore (15), the cooling duct (10), the first part cavity (13) and through the second part cavity (14).

5. Multiple-piece rotor shaft (1) according to one of the preceding claims, comprising, furthermore, an internal pump (21) which is arranged inside the rotor shaft (1) and is driven by the rotor shaft (1), and which is set up to convey a cooling medium through the axial through bore (15), the cooling duct (10), the first part cavity (13) and through the second part cavity (14).

6. Multiple-piece rotor shaft (1) according to Claim 5, the internal pump (21) comprising a double-flow pump impeller which is connected fixedly to the line element (9) as to rotate with it.

7. Multiple-piece rotor shaft (1) according to Claim 6,
- the double-flow pump impeller comprising a first impeller (22) and a second impeller (23),
- the first impeller (22) being arranged inside the first part cavity (13) and being set up to convey cooling medium which is situated in the cooling duct (10) via the at least one first bore (16) of the line element (9) into the first part cavity (13), and
- the second impeller (23) being arranged inside the second part cavity (14) and being set up to convey cooling medium which is situated in the cooling duct (10) via the at least one second bore (17) of the line element (9) into the second part cavity (14).

8. Rotor for an electric machine, the rotor comprising a multiple-piece rotor shaft (1) according to one of the preceding claims and a rotor laminated core (7) which is arranged fixedly on the carrier (6) of the multiple-piece rotor shaft (1) so as to rotate with it.

9. Electric machine for a vehicle, the electric machine comprising a rotor according to Claim 8.

## Revendications

1. Arbre de rotor (1) formé de plusieurs parties et destiné à une machine électrique, l'arbre de rotor (1) formé de plusieurs parties comprenant :
- un premier tourillon d'arbre (2) pourvu d'un premier flasque d'extrémité (3) et d'un alésage traversant axial (15),
- un deuxième tourillon d'arbre (4) pourvu d'un deuxième flasque d'extrémité (5),
- un support creux (6) destiné à un noyau de rotor feuilleté (7),
- un élément de conduite (9) destiné au passage d'un milieu de refroidissement, et
- un élément de séparation (11),
- le support (6) destiné au noyau de rotor feuilleté (7) étant disposé entre le premier tourillon d'arbre (2) et le deuxième tourillon d'arbre (4),
- le support (6), le premier flasque d'extrémité (3) et le deuxième flasque d'extrémité (5) délimitant entre eux une cavité (8),
- l'élément de conduite (9) formant un canal de refroidissement (10) à l'intérieur de la cavité (8), le canal de refroidissement (10) étant relié au premier alésage traversant axial (15), s'étendant entre le premier tourillon d'arbre (2) et le deuxième tourillon d'arbre (4) et étant relié à une partie extérieure de la cavité (8) qui est formée entre le support (6) et l'élément de conduite (9),
- l'élément de séparation (11) divisant la partie extérieure de la cavité (8) en une première partie de cavité (13) du côté du premier tourillon d'arbre (2) et en une deuxième partie de cavité (14) du côté du deuxième tourillon d'arbre (4), la première partie de cavité (13) étant reliée au canal de refroidissement (10) par au moins un premier alésage (16) de l'élément de conduite (9), et la deuxième partie de cavité (14) étant reliée au canal de refroidissement (10) par au moins un deuxième alésage (17) de l'élément de conduite (9), et
- la première bride d'extrémité (3) comportant au moins une première ouverture (18) destinée à évacuer le milieu de refroidissement de la première partie de cavité (13), et la deuxième bride d'extrémité (5) comportant au moins une deuxième ouverture (19) destinée à l'évacuation du milieu de refroidissement provenant de la deuxième partie de cavité (14) .

2. Arbre de rotor (1) formé de plusieurs parties selon la revendication 1, l'élément de séparation (11) saillant de l'élément de conduite (9) dans la direction radiale (r).

3. Arbre de rotor (1) formé en plusieurs parties selon l'une des revendications précédentes, l'élément de séparation (11) étant relié d'un seul tenant à l'élément de conduite (9).

4. Arbre de rotor (1) formé de plusieurs parties selon l'une des revendications précédentes, ledit arbre comprenant en outre une pompe externe (20) qui est disposée à l'extérieur de l'arbre de rotor (1) et qui est conçue pour transporter un milieu de refroidissement à travers l'alésage traversant axial (15), le canal de refroidissement (10), la première partie de cavité partielle (13) et la deuxième partie de cavité (14).

5. Arbre de rotor (1) formé de plusieurs parties selon l'une des revendications précédentes, ledit arbre comprenant en outre une pompe interne (21) qui est disposée à l'intérieur de l'arbre de rotor (1) et entraînée par l'arbre de rotor (1), et qui est conçue pour transporter un milieu de refroidissement à travers l'alésage traversant axial (15), le canal de refroidissement (10), la première partie de cavité (13) et la deuxième partie de cavité (14).

6. Arbre de rotor (1) formé de plusieurs parties selon la revendication 5, la pompe interne (21) comprenant une roue de pompe à double flux reliée solidairement en rotation à l'élément de conduite (9).

7. Arbre de rotor (1) formé de plusieurs parties selon la revendication 6,
- la roue de pompe à double flux comprenant une première roue (22) et une deuxième roue (23),
- la première roue (22) étant disposée à l'intérieur de la première partie de cavité (13) et étant conçue pour transporter le milieu de refroidissement, qui se trouve dans le canal de refroidissement (10), jusque dans la première partie de cavité (13) par le biais de l'au moins un premier alésage (16) de l'élément de conduite (9), et
- la deuxième roue (23) étant disposée à l'intérieur de la deuxième partie de cavité (14) et étant conçue pour transporter le milieu de refroidissement, qui se trouve dans le canal de refroidissement (10), jusque dans la deuxième partie de cavité (14) par le biais de l'au moins un deuxième alésage (17) de l'élément de conduite (9).

8. Rotor destiné à une machine électrique, le rotor comprenant un arbre de rotor (1) formé de plusieurs parties selon l'une des revendications précédentes et un noyau de rotor feuilleté (7) qui est monté solidairement en rotation sur le support (6) de l'arbre de rotor (1) formé de plusieurs parties.

9. Machine électrique destinée à un véhicule, la machine électrique comprenant un rotor selon la revendication 8.
